# EUROPEAN PATENT APPLICATION

(11) **EP 4 645 937 A1**
(43) Date of publication of application: **05.11.2025**
(21) Application number: 23910496.1
(22) Date of filing: 25.12.2023
(51) Int. Cl.: H04W 24/02, H04W 24/08

(54) **POLICY CONFIGURATION METHOD AND APPARATUS, TERMINAL, NETWORK SIDE DEVICE, AND READABLE STORAGE MEDIUM**

(30) Priority: 28.12.2022 CN 202211700707
(71) Applicant: Vivo Mobile Communication Co., Ltd., Dongguan, Guangdong 523863 (CN)
(72) Inventor: XIE, Zhenhua, Dongguan, Guangdong 523863 (CN)
(74) Representative: Walaski, Jan Filip
(86) International application number: PCT/CN2023/141553
(87) International publication number: WO 2024/140570

(57) **Abstract**

The present application relates to the technical field of communications, and discloses a policy configuration method and apparatus, a terminal, a network side device, and a readable storage medium. The policy configuration method in an embodiment of the present application comprises: a first core network function sends target information to a first communication device. The target information comprises at least one of the following: first policy information and second policy information; rule matching information in the first policy information is used for matching a first PDU session; and rule matching information in the second policy information is used for matching a second PDU session. The first PDU session is used for transmitting information between a first device and a first network. The second PDU session is used for transmitting information between a first communication device and the first network. The first device is connected to a first communication device, and the first network is a network corresponding to the first core network function.

## Description

### CROSS-REFERENCE TO RELATED APPLICATIONS

This application claims priority to Chinese Patent Application No. 202211700707.4, filed with the China National Intellectual Property Administration on December 28, 2022 and entitled "POLICY CONFIGURATION METHOD AND APPARATUS, TERMINAL, NETWORK-SIDE DEVICE, AND READABLE STORAGE MEDIUM", which is incorporated herein by reference in its entirety.

### TECHNICAL FIELD

This application belongs to the field of communication technologies, and specifically, to a policy configuration method and apparatus, a terminal, a network-side device, and a readable storage medium.

### BACKGROUND

Currently, in a personal IoT network (Personal IoT Network, PIN) technology, different terminals may communicate with a network-side device, to implement different functions. For example, a gateway terminal may access a 5th generation mobile communication technology (5th Generation Mobile Communication Technology, 5G) network, to communicate with a network-side device, so that a PIN device can be provided with a capability of accessing the 5G network. Alternatively, a management terminal may access a 5G network, to communicate with a network-side device, so that a gateway terminal can be controlled.

However, capabilities of the gateway terminal and the management terminal may be different. Therefore, after the network-side device configures a same policy for the gateway terminal and the management terminal to match protocol data unit (Protocol Data Unit, PDU) sessions, the gateway terminal or the management terminal may fail to match a PDU session based on the policy, and the gateway terminal or the management terminal may fail to communicate with the network-side device. As a result, communication reliability is low.

### SUMMARY

Embodiments of this application provide a policy configuration method and apparatus, a terminal, a network-side device, and a readable storage medium, which can resolve a problem of low communication reliability.

According to a first aspect, a policy configuration method is provided. The method is applied to a first core network function, and includes: A first core network function sends target information to a first communication device. The target information includes at least one of the following: first policy information and second policy information, where rule matching information in the first policy information is used to match a first PDU session, and rule matching information in the second policy information is used to match a second PDU session. The first PDU session is used to transmit information between a first device and a first network, and the second PDU session is used to transmit information between the first communication device and the first network. The first device is connected to the first communication device, and the first network is a network corresponding to the first core network function.

According to a second aspect, a policy configuration apparatus is provided. The policy configuration apparatus includes: a sending module. The sending module is configured to send target information to a first communication device. The target information includes at least one of the following: first policy information and second policy information, where rule matching information in the first policy information is used to match a first PDU session, and rule matching information in the second policy information is used to match a second PDU session. The first PDU session is used to transmit information between a first device and a first network, and the second PDU session is used to transmit information between the first communication device and the first network. The first device is connected to the first communication device, and the first network is a network corresponding to the policy configuration apparatus.

According to a third aspect, a policy configuration method is provided. The method is applied to a first communication device, and includes: A first communication device receives target information from a first core network function. The target information includes at least one of the following: first policy information and second policy information, where rule matching information in the first policy information is used to match a first PDU session, and rule matching information in the second policy information is used to match a second PDU session. The first PDU session is used to transmit information between a first device and a first network, and the second PDU session is used to transmit information between the first communication device and the first network. The first device is connected to the first communication device, and the first network is a network corresponding to the first core network function.

According to a fourth aspect, a policy configuration apparatus is provided. The policy configuration apparatus includes: a receiving module. The receiving module is configured to receive target information from a first core network function. The target information includes at least one of the following: first policy information and second policy information, where rule matching information in the first policy information is used to match a first PDU session, and rule matching information in the second policy information is used to match a second PDU session. The first PDU session is used to transmit information between a first device and a first network, and the second PDU session is used to transmit information between the policy configuration apparatus and the first network. The first device is connected to the policy configuration apparatus, and the first network is a network corresponding to the first core network function.

According to a fifth aspect, a network-side device is provided. The network-side device includes a processor and a memory. The memory stores a program or instructions that may be run on the processor. When the program or the instructions are executed by the processor, the steps of the method according to the first aspect are implemented.

According to a sixth aspect, a network-side device is provided, including a processor and a communication interface. The communication interface is configured to send target information to a first communication device. The target information includes at least one of the following: first policy information and second policy information, where rule matching information in the first policy information is used to match a first PDU session, and rule matching information in the second policy information is used to match a second PDU session. The first PDU session is used to transmit information between a first device and a first network, and the second PDU session is used to transmit information between the first communication device and the first network. The first device is connected to the first communication device, and the first network is a network corresponding to the network-side device.

According to a seventh aspect, a terminal is provided. The terminal includes a processor and a memory. The memory stores a program or instructions that may be run on the processor. When the program or the instructions are executed by the processor, the steps of the method according to the third aspect are implemented.

According to an eighth aspect, a terminal is provided, including a processor and a communication interface. The communication interface is configured to receive target information from a first core network function. The target information includes at least one of the following: first policy information and second policy information, where rule matching information in the first policy information is used to match a first PDU session, and rule matching information in the second policy information is used to match a second PDU session. The first PDU session is used to transmit information between a first device and a first network, and the second PDU session is used to transmit information between the terminal and the first network. The first device is connected to the terminal, and the first network is a network corresponding to the first core network function.

According to a ninth aspect, a policy configuration system is provided, including: a terminal and a network-side device, where the network-side device may be configured to perform the steps of the method according to the first aspect, and the terminal may be configured to perform the steps of the method according to the third aspect.

According to a tenth aspect, a readable storage medium is provided. The readable storage medium stores a program or instructions. When the program or the instructions are executed by a processor, the steps of the method according to the first aspect or the steps of the method according to the third aspect are implemented.

According to an eleventh aspect, a chip is provided. The chip includes a processor and a communication interface. The communication interface is coupled to the processor. The processor is configured to execute a program or instructions, to implement the steps of the method according to the first aspect, or implement the steps of the method according to the third aspect.

According to a twelfth aspect, a computer program/program product is provided. The computer program/program product is stored in a storage medium and executed by at least one processor to implement the steps of the method according to the first aspect or implement the steps of the method according to the third aspect.

In embodiments of this application, the first core network function may send the target information to the first communication device, where the target information includes at least one of the first policy information and the second policy information, so that the first communication device may receive the target information from the first core network function. The rule matching information in the first policy information is used to match the first PDU session, the rule matching information in the second policy information is used to match the second PDU session, the first PDU session is used to transmit the information between the first device and the first network, and the second PDU session is used to transmit the information between the first communication device and the first network. The first device is connected to the first communication device, and the first network is a network corresponding to the first core network function. The first core network function may send at least one of the first policy information and the second policy information to the first communication device, that is, the first core network function may configure at least one of two policies for the first communication device to match a PDU session, instead of configuring a same policy for the first communication device and a management terminal to match PDU sessions. Therefore, the occurrence of the first communication device failing to match a PDU session based on a configured policy can be reduced, and the occurrence of the first communication device failing to communicate with the network-side device can be reduced. In this way, communication reliability may be improved.

### BRIEF DESCRIPTION OF THE DRAWINGS

FIG. 1 is a block diagram of a wireless communication system according to an embodiment of this application;
FIG. 2 is a schematic flowchart 1 of a policy configuration method according to an embodiment of this application;
FIG. 3 is a schematic flowchart 2 of a policy configuration method according to an embodiment of this application;
FIG. 4 is a diagram 1 of interaction between a first communication device and a first core network function according to an embodiment of this application;
FIG. 5 is a diagram 2 of interaction between a first communication device and a first core network function according to an embodiment of this application;
FIG. 6 is a diagram 1 of a structure of a policy configuration apparatus according to an embodiment of this application;
FIG. 7 is a diagram 2 of a structure of a policy configuration apparatus according to an embodiment of this application;
FIG. 8 is a diagram of a structure of a communication device according to an embodiment of this application;
FIG. 9 is a diagram of a hardware structure of a terminal according to an embodiment of this application;
FIG. 10 is a diagram 1 of a hardware structure of a network-side device according to an embodiment of this application; and
FIG. 11 is a diagram 2 of a hardware structure of a network-side device according to an embodiment of this application.

### DETAILED DESCRIPTION

The following clearly describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application shall fall within the protection scope of this application.

In this specification and claims of this application, the terms "first", "second", and the like are intended to distinguish between similar objects but do not indicate a specific order or sequence. It should be understood that the terms used in such a way are interchangeable in appropriate circumstances, so that embodiments of this application can be implemented in other orders than an order illustrated or described herein, and objects distinguished by "first" and "second" are usually of the same category and a quantity of the objects is not limited. For example, there may be one or more first objects. In addition, the expression "and/or" in this specification and claims represents at least one of connected objects, and the character "/" generally indicates an "or" relationship between the associated objects.

It should be noted that, the technology described in embodiments of this application is not limited to a long term evolution (Long Term Evolution, LTE)/LTE-advanced (LTE-Advanced, LTE-A) system, but may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in embodiments of this application are usually interchangeably used, and the technologies described may be applied to the systems and radio technologies mentioned above, and may be further applied to other systems and radio technologies. The following description describes a new radio (New Radio, NR) system for illustration, and NR terminology is used in most of the following descriptions. However, these technologies may be further applied to applications other than NR system applications, such as a 6th generation (6th Generation, 6G) communication system.

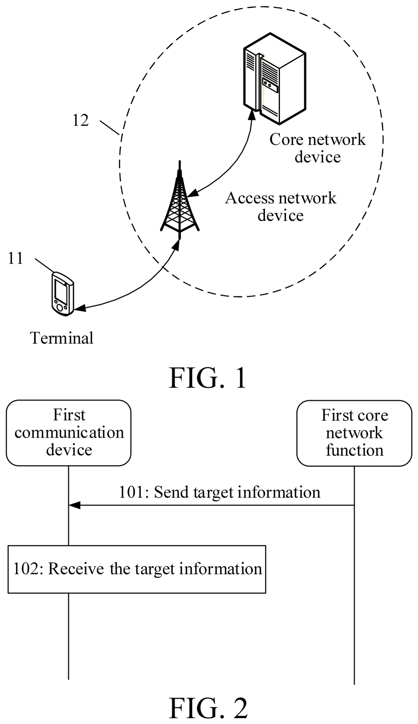

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), and a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes: a smart watch, a smart band, a smart headset, smart glasses, smart jewelry (a smart bracelet, a smart hand chain, a smart ring, a smart necklace, a smart bangle, a smart anklet, and the like), a smart wrist strap, smart clothing, and the like. It should be noted that, a specific type of the terminal 11 is not limited in embodiments of this application. The network-side device 12 may include an access network device or a core network device. The access network device 12 may alternatively be referred to as a radio access network device, a radio access network (Radio Access Network, RAN), a radio access network function, or a radio access network element. The access network device 12 may include a base station, a WLAN access point, a Wi-Fi node, or the like. The base station may be referred to as a node B, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolved B node, a transmitting receiving point (Transmitting Receiving Point, TRP), or any other suitable term in the art, provided that the same technical effects are achieved. The base station is not limited to a particular technical vocabulary. It should be noted that, the base station in the NR system is used only as an example for description in embodiments of this application, but a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, the core network device in the NR system is used only as an example for description in embodiments of this application, but a specific type of the core network device is not limited.

The following describes in detail a policy configuration method and apparatus, a terminal, a network-side device, and a readable storage medium provided in embodiments of this application with reference to the accompanying drawings and by using some embodiments and application scenarios thereof.

FIG. 2 is a flowchart of a policy configuration method according to an embodiment of this application. As shown in FIG. 2, the policy configuration method provided in embodiments of this application may include the following step 101 and step 102.

Step 101: A first core network function sends target information to a first communication device.

In embodiments of this application, the target information includes at least one of the following: first policy information and second policy information, where rule matching information in the first policy information is used to match a first PDU session, and rule matching information in the second policy information is used to match a second PDU session. The first PDU session is used to transmit information (for example, data and/or signaling) between a first device and a first network, and the second PDU session is used to transmit information (for example, data and/or signaling) between the first communication device and the first network. The first device is connected to the first communication device, and the first network is a network corresponding to the first core network function.

It should be noted that, the foregoing mapping may alternatively be described as: associated, related, mapped, or the like.

Optionally, in embodiments of this application, the first core network function may be specifically a policy control function (Policy Control Function, PCF), the first communication device may be specifically a gateway terminal (PIN Element with Gateway Capability, PEGC), and the first device may be a PIN device.

Optionally, in embodiments of this application, the first policy information may be specifically a personal IoT network routing selection policy (PIN Routing Selection Policy), and the second policy information may be specifically a user equipment (User Equipment, UE) policy selection policy (UE Policy Selection Policy). The PIN routing selection policy is specific to the PEGC, and the UE policy selection policy is specific to a management terminal (PIN Element with Management Capability, PEMC). The PEGC may also use the UE policy selection policy.

Herein, the rule matching information in the first policy information indicates a parameter of establishing the first PDU session and/or indicates a manner of using the first PDU session. The rule matching information in the second policy information indicates a parameter of establishing the second PDU session and/or indicates a manner of using the second PDU session. The parameter may include at least one of the following: a parameter of a packet filter, a data network name, and the like.

It should be noted that, the foregoing "manner of using the first PDU session" may be understood as: how to use the first PDU session, and/or how to release the first PDU session, and/or how to stop using the first PDU session. The foregoing "manner of using the second PDU session" may be understood as: how to use the second PDU session, and/or how to release the second PDU session, and/or how to stop using the second PDU session.

Optionally, in embodiments of this application, the first network may be any one of the following: a 4th generation mobile communication technology (4th Generation Mobile Communication Technology, 4G) network, a 5G network, a 6th generation mobile communication technology (6th Generation Mobile Communication Technology, 6G) network, and the like.

Optionally, in embodiments of this application, the first communication device may send a registration request to an access and mobility management function (Access and Mobility management Function, AMF) network element. The registration request is used to request to register with the first network, so that the AMF network element may forward the registration request to the first core network function. In this way, the first core network function may send a registration response to the AMF network element based on the registration request, where the registration response includes target information, so that the AMF network element can forward the registration response to the first communication device, and then the first communication device can obtain the target information.

In an example, the first core network function may obtain related information of the first communication device based on the registration request, and determine the target information based on the related information of the first communication device.

In another example, the first core network function may directly determine the first policy information and the second policy information as the target information.

Step 102: The first communication device receives the target information from the first core network function.

In embodiments of this application, the target information includes at least one of the following: the first policy information and the second policy information, where the rule matching information in the first policy information is used to match the first PDU session, and the rule matching information in the second policy information is used to match the second PDU session. The first PDU session is used to transmit the information between the first device and the first network, and the second PDU session is used to transmit the information between the first communication device and the first network. The first device is connected to the first communication device, and the first network is a network corresponding to the first core network function.

Optionally, in embodiments of this application, after receiving the target information, the first communication device may perform an operation on a PDU session based on the target information. The operation includes any one of the following: establishing the PDU session, using the PDU session, releasing the PDU session, and stopping using the PDU session.

When the target information includes the first policy information, the PDU session includes the first PDU session. When the target information includes the second policy information, the PDU session includes the second PDU session.

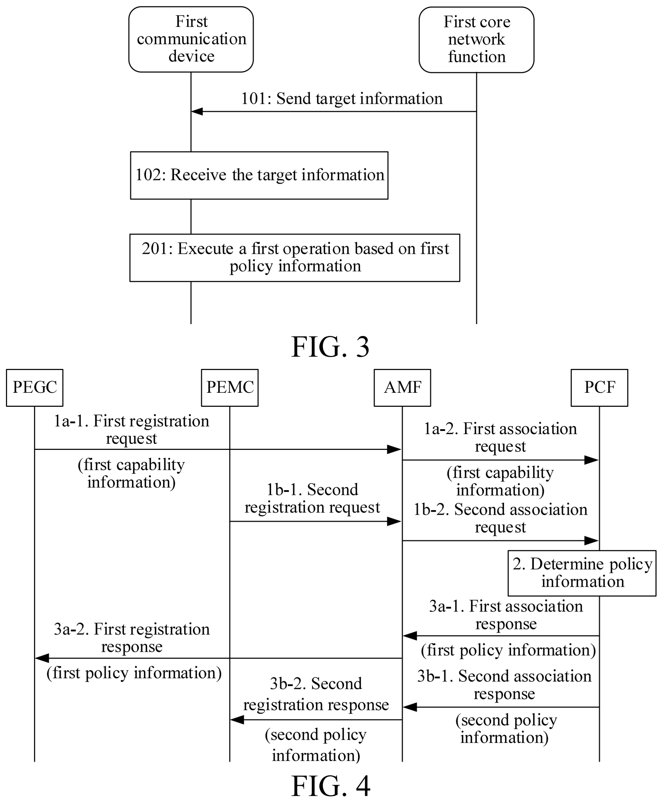

Optionally, in embodiments of this application, the target information includes the first policy information. Specifically, with reference to FIG. 2, as shown in FIG. 3, after step 102, the policy configuration method provided in embodiments of this application may further include the following step 201.

Step 201: The first communication device performs a first operation based on the first policy information.

In embodiments of this application, the first operation includes any one of the following:
establishing the first PDU session;
using the first PDU session;
releasing the first PDU session; and
stopping using the first PDU session.

Optionally, in embodiments of this application, the first operation further includes any one of the following:
The first communication device establishes the first PDU session when the first PDU session does not exist;
the first communication device uses the first PDU session when the first PDU session exists;
the first communication device releases the first PDU session when first rule matching information in the first policy information is invalidated; and
the first communication device stops using the first PDU session when first rule matching information in the first policy information is invalidated, where
the first rule matching information is used to match the first PDU session.

Further, when a first condition is met, it may be considered that the first rule matching information in the first policy information is invalidated. The first condition includes at least one of the following: the first rule matching information is deleted, the first rule matching information is invalid, the first policy information is deleted, and the first policy information is invalid.

Optionally, in embodiments of this application, both the first PDU session and the second PDU session serve a target object, and the target object includes any one of the following: a first PIN network and a first PIN service.

Optionally, in embodiments of this application, the first policy information includes first rule matching information, and the first rule matching information is used to match the first PDU session with the target object. The second policy information includes second rule matching information, the second rule matching information is used to match the second PDU session, and the second PDU session serves the target object.

In the first rule matching information, the first PIN network may be represented by using an identifier, an Internet protocol (Internet Protocol, IP) address field, a media access control (Media Access Control, MAC) address field, IP subnet information, or the like. The first PIN service may be identified by using an identifier, a name, a set of terminals included, or the like.

Optionally, in embodiments of this application, after step 102, the policy configuration method provided in embodiments of this application may further include the following step 301.

Step 301: When second information of a second device is received by the first communication device, the first communication device transmits the second information through the first PDU session.

In embodiments of this application, the second information is information between the second device and the first network. The second device pertains to the target object, and the second device is connected to the first communication device.

Optionally, in embodiments of this application, the second device may be a PIN device.

According to the policy configuration method provided in embodiments of this application, the first core network function may send the target information to the first communication device, where the target information includes at least one of the first policy information and the second policy information, so that the first communication device may receive the target information from the first core network function. The rule matching information in the first policy information is used to match the first PDU session, the rule matching information in the second policy information is used to match the second PDU session, the first PDU session is used to transmit the information between the first device and the first network, and the second PDU session is used to transmit the information between the first communication device and the first network. The first device is connected to the first communication device, and the first network is a network corresponding to the first core network function. The first core network function may send at least one of the first policy information and the second policy information to the first communication device, that is, the first core network function may configure at least one of two policies for the first communication device to match a PDU session, instead of configuring a same policy for the first communication device and a management terminal to match PDU sessions. Therefore, the occurrence of the first communication device failing to match a PDU session based on a configured policy can be reduced, and the occurrence of the first communication device failing to communicate with the network-side device can be reduced. In this way, communication reliability may be improved.

Two different examples are used below to describe how the first core network function sends target information.

### Example 1

Optionally, in embodiments of this application, with reference to FIG. 2, as shown in FIG. 3, before step 101, the policy configuration method provided in embodiments of this application may further include the following step 401, and step 101 may be specifically implemented by using the following step 101a.

Step 401: The first core network function obtains first information.

In embodiments of this application, the first information includes at least one of the following: first capability information and subscription information of the first communication device. The first capability information indicates a first capability of the first communication device for a PIN, and the subscription information includes information about a PIN service to which the first communication device subscribes.

Optionally, in embodiments of this application, the first capability includes at least one of the following: presence or absence of a capability of processing the first policy information, and presence or absence of a gateway capability.

In an example, the first information may be preconfigured in the first core network function, so that the first core network function can directly obtain the first information.

In another example, the first core network function may receive the first information from another device, so that the first core network function can obtain the first information.

Optionally, in embodiments of this application, step 401 may be specifically implemented by using the following step 401a.

Step 401a: The first core network function obtains the first information from the first communication device or a second core network function.

Optionally, in embodiments of this application, the second core network function may be any one of the following: a unified data management (Unified Data Management, UDM) network element and a unified data repository (Unified Data Repository, UDR) network element.

Optionally, in embodiments of this application, when the first information includes the first capability information, the first core network function may receive the first capability information from the first communication device. When the first information includes the subscription information of the first communication device, the first core network function may obtain the subscription information from the second core network function.

Optionally, in embodiments of this application, the first information is obtained by the first core network function from the first communication device. Specifically, before step 102, the policy configuration method provided in embodiments of this application may further include the following step 501, and step 401a may be specifically implemented by using the following step 401a1.

Step 501: The first communication device sends the first information to the first core network function.

In embodiments of this application, the first information includes at least one of the following: the first capability information and the subscription information of the first communication device. The first capability information indicates the first capability of the first communication device for the PIN, and the subscription information includes the information about the PIN service to which the first communication device subscribes. The first information is used for the first core network function to send the target information to the first communication device.

Optionally, in embodiments of this application, the first capability includes at least one of the following: the presence or absence of a capability of processing the first policy information, and the presence or absence of a gateway capability.

Step 401a1: The first core network function receives the first information from the first communication device.

Optionally, in embodiments of this application, the first information is obtained by the first core network function from the second core network function. Specifically, before step 102, the policy configuration method provided in embodiments of this application may further include the following step 502, and step 401a may be specifically implemented by using the following step 401a2.

Step 502: The second core network function sends the first information to the first core network function.

In embodiments of this application, the first information includes at least one of the following: the first capability information and the subscription information of the first communication device. The first capability information indicates the first capability of the first communication device for the PIN, and the subscription information includes the information about the PIN service to which the first communication device subscribes. The first information is used for the first core network function to send the target information to the first communication device.

Step 401a2: The first core network function receives the first information from the second core network function.

Optionally, in embodiments of this application, the second core network function may be any one of the following: a UDM network element and a UDR network element.

Step 101a: The first core network function sends the target information to the first communication device based on the first information.

Optionally, in embodiments of this application, the first core network function may determine, based on the first information, to send or not send the first policy information to the first communication device, and send the target information to the first communication device.

It may be understood that, when it is determined to send the first policy information to the first communication device, the target information includes the first policy information. When it is determined not to send the first policy information to the first communication device, the target information does not include the first policy information.

A specific example is used below to describe how the first communication device sends the target information to the first communication device based on the first information.

Optionally, in embodiments of this application, step 101a may be specifically implemented by using the following step 101a1.

Step 101a1: The first core network function sends or does not send the first policy information to the first communication device based on the first information.

Optionally, in embodiments of this application, when the first information includes the first capability information, if the first capability includes the absence of the capability of processing the first policy information (and/or the absence of the gateway capability), the first core network function does not send the first policy information to the first communication device. If the first capability includes the presence of the capability of processing the first policy information (and/or the presence of the gateway capability), the first core network function may send the first policy information to the first communication device.

Optionally, in embodiments of this application, if the subscription information of the first communication device indicates that the first communication device does not have the PIN service, the first core network function does not send the first policy information to the first communication device. If the subscription information of the first communication device indicates that the first communication device has the PIN service, the first core network function may send the first policy information to the first communication device.

For example, an example in which the first communication device is the PEGC and the first information is the first capability information is used for description. As shown in FIG. 4, the first communication device (namely the PEGC) may send a first registration request (Registration Request) to the AMF network element, where the first registration request is used to request to register with the first network, and the first registration request (Registration Request) includes the first capability information PIN capability Indication, and the PEMC may send a second registration request (Registration Request) to the AMF network element, where the second registration request (Registration Request) is used to request to register with the first network, so that the AMF network element may send, based on the first registration request (Registration Request), a first association request (Association Request) to the PCF, where the first association request includes the first capability information PIN capability Indication, and the AMF network element may send, based on the second registration request (Registration Request), a second association request (Association Request) to the PCF. In this way, the PCF may send, based on the first capability information PIN capability Indication in the first association request (Association Request), a first registration response (Registration Response) to the first communication device through the AMF, where the first registration response (Registration Response) includes the first policy information PIN Routing Selection Policy, and send, based on the second association request (Association Request), a second registration response (Registration Response) to the PEMC through the AMF, where the second registration response (Registration Response) includes the second policy information UE Routing Selection Policy.

It may be understood that the first core network function may determine, based on whether a registration request includes the first capability information, whether a terminal sending the registration request is a gateway terminal, to determine whether to send the first policy information to the terminal sending the registration request.

### Example 2

Optionally, in embodiments of this application, the target information includes the first policy information and the second policy information.

It may be understood that the first core network function may send the first policy information and the second policy information to all terminals, while the PEMC does not support the first policy information PIN Routing Selection Policy, and therefore the PEMC may ignore the first policy information PIN Routing Selection Policy.

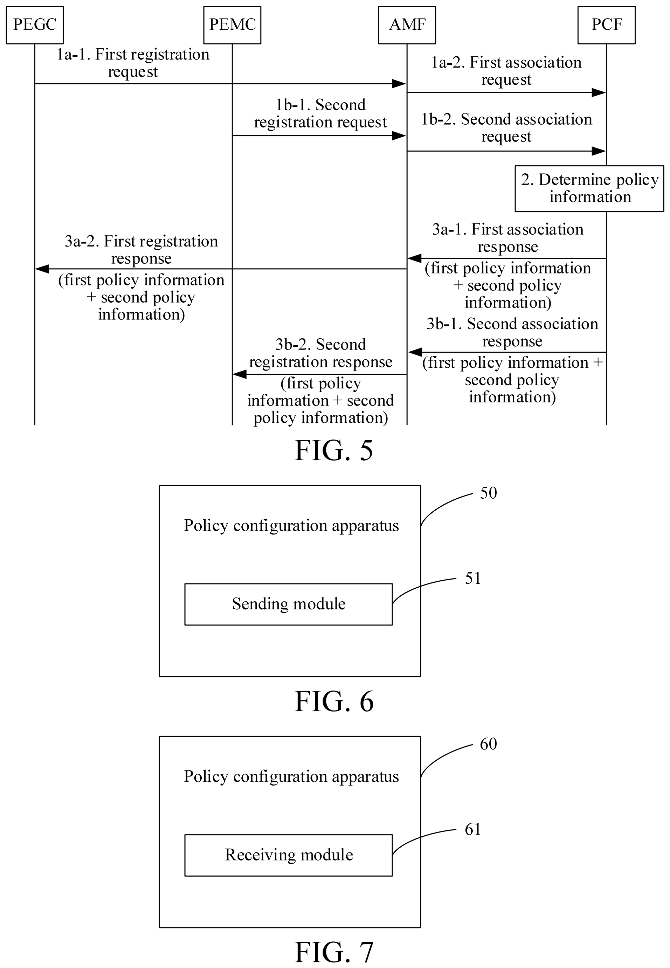

For example, an example in which the first communication device is the PEGC and the first information is the first capability information is used for description. As shown in FIG. 5, the first communication device (namely the PEGC) may send a first registration request (Registration Request) to the AMF network element, where the first registration request is used to request to register with the first network, and the PEMC may send a second registration request (Registration Request) to the AMF network element, where the second registration request (Registration Request) is used to request to register with the first network, so that the AMF network element may send, based on the first registration request (Registration Request), a first association request (Association Request) to the PCF, and the AMF network element may send, based on the second registration request (Registration Request), a second association request (Association Request) to the PCF. In this way, the PCF may send, based on the first association request (Association Request), a first registration response (Registration Response) to the first communication device through the AMF, where the first registration response (Registration Response) includes the first policy information PIN Routing Selection Policy and the second policy information UE Routing Selection Policy, and send, based on the second association request (Association Request), a second registration response (Registration Response) to the PEMC through the AMF, where the second registration response (Registration Response) includes the first policy information PIN Routing Selection Policy and the second policy information UE Routing Selection Policy.

It may be understood that the first core network function may send the first policy information and the second policy information to all terminals.

Optionally, in embodiments of this application, after the first core network function sends the target information (which includes the first policy information and the second policy information) to the first communication device, the first communication device may establish a first PDU session (which serves a target object (namely a first PIN network or a first PIN service)) based on the first policy information PIN Routing Selection Policy. In this case, if the first communication device further establishes a second PDU session (which serves the target object) based on the second policy information UE Routing Selection Policy, the first PDU session is used, and vice versa.

It should be noted that, for the description of the first communication device using the first PDU session, refer to the specific descriptions in the above embodiments. Details are not described herein again in embodiments of this application.

For example, it is assumed that the first rule matching information in the first policy information PIN Routing Selection Policy based on which the first core network function establishes the first PDU session (namely the rule matching information in the first policy information PIN Routing Selection Policy) includes a packet filter A, and the first PDU session uses a data network name B. In this case, when the first communication device establishes the second PDU session (which uses the data network name B) based on the second policy information UE Routing Selection Policy (which includes the packet filter A), the first communication device no longer establishes the second PDU session, but uses the first PDU session.

For the policy configuration method provided in embodiments of this application, an execution body may be a policy configuration apparatus. In embodiments of this application, an example in which a policy configuration apparatus performs a policy configuration method is used to describe the policy configuration apparatus provided in embodiments of this application.

FIG. 6 is a diagram of a possible structure of a policy configuration apparatus according to an embodiment of this application. As shown in FIG. 6, the policy configuration apparatus 50 may include: a sending module 51.

The sending module 51 is configured to send target information to a first communication device. The target information includes at least one of the following: first policy information and second policy information, where rule matching information in the first policy information is used to match a first PDU session, and rule matching information in the second policy information is used to match a second PDU session. The first PDU session is used to transmit information between a first device and a first network, and the second PDU session is used to transmit information between the first communication device and the first network. The first device is connected to the first communication device, and the first network is a network corresponding to the policy configuration apparatus.

In a possible implementation, the policy configuration apparatus 50 provided in embodiments of this application may further include: a obtaining module. The obtaining module is configured to obtain first information. The first information includes at least one of the following: first capability information and subscription information of the first communication device. The first capability information indicates a first capability of the first communication device for a PIN, and the subscription information includes information about a PIN service to which the first communication device subscribes. The sending module 51 is specifically configured to send the target information to the first communication device based on the first information obtained by the obtaining module.

In a possible implementation, the first capability includes at least one of the following: presence or absence of a capability of processing the first policy information, and presence or absence of a gateway capability.

In a possible implementation, the sending module 51 is specifically configured to send or not send the first policy information to the first communication device based on the first information.

In a possible implementation, the obtaining module is specifically configured to obtain the first information from the first communication device or a second core network function.

In a possible implementation, both the first PDU session and the second PDU session serve a target object, and the target object includes any one of the following: a first PIN network and a first PIN service.

In a possible implementation, the first policy information includes first rule matching information, and the first rule matching information is used to match the first PDU session with the target object. The second policy information includes second rule matching information, the second rule matching information is used to match the second PDU session, and the second PDU session serves the target object.

According to the policy configuration apparatus provided in embodiments of this application, the policy configuration apparatus may send at least one of the first policy information and the second policy information to the first communication device, that is, the policy configuration apparatus may configure at least one of two policies for the first communication device to match a PDU session, instead of configuring a same policy for the first communication device and a management terminal to match PDU sessions. Therefore, the occurrence of the first communication device failing to match a PDU session based on a configured policy can be reduced, and the occurrence of the first communication device failing to communicate with a network-side device can be reduced. In this way, communication reliability may be improved.

The policy configuration apparatus in embodiments of this application may be an electronic device, for example, an electronic device having an operating system, or may be a component, for example, an integrated circuit or a chip in an electronic device. The electronic device may be either a network-side device or another device other than the network-side device. For example, the network-side device may include but is not limited to the foregoing types of the network-side device 12, and the another device may be a server, a network attached storage (Network Attached Storage, NAS), or the like. This is not specifically limited in embodiments of this application.

The policy configuration apparatus provided in embodiments of this application can implement processes implemented in the method embodiment of FIG. 1 to FIG. 5, and the same technical effects are achieved. To avoid repetition, details are not described herein again.

FIG. 7 is a diagram of a possible structure of a policy configuration apparatus according to an embodiment of this application. As shown in FIG. 7, the policy configuration apparatus 60 may include: a receiving module 61.

The receiving module 61 is configured to receive target information from a first core network function. The target information includes at least one of the following: first policy information and second policy information, where rule matching information in the first policy information is used to match a first PDU session, and rule matching information in the second policy information is used to match a second PDU session. The first PDU session is used to transmit information between a first device and a first network, and the second PDU session is used to transmit information between the policy configuration apparatus 60 and the first network. The first device is connected to the policy configuration apparatus 60, and the first network is a network corresponding to the first core network function.

In a possible implementation, the policy configuration apparatus 60 provided in embodiments of this application may further include: a sending module. The sending module is configured to send first information to the first core network function. The first information includes at least one of the following: first capability information and subscription information of the policy configuration apparatus 60. The first capability information indicates a first capability of the policy configuration apparatus 60 for a PIN, and the subscription information includes information about a PIN service to which the policy configuration apparatus 60 subscribes. The first information is used for the first core network function to send the target information to the policy configuration apparatus 60.

In a possible implementation, the first capability includes at least one of the following: presence or absence of a capability of processing the first policy information, and presence or absence of a gateway capability.

In a possible implementation, the target information includes the first policy information. The policy configuration apparatus 60 provided in embodiments of this application may further include: an execution module. The execution module is configured to perform a first operation based on the first policy information. The first operation includes any one of the following: establishing the first PDU session; using the first PDU session; releasing the first PDU session; and stopping using the first PDU session.

In a possible implementation, the first operation further includes any one of the following: establishing the first PDU session when the first PDU session does not exist; using the first PDU session when the first PDU session exists; releasing the first PDU session when first rule matching information in the first policy information is invalidated; and stopping using the first PDU session when first rule matching information in the first policy information is invalidated, where the first rule matching information is used to match the first PDU session.

In a possible implementation, both the first PDU session and the second PDU session serve a target object, and the target object includes any one of the following: a first PIN network and a first PIN service.

In a possible implementation, the policy configuration apparatus 60 provided in embodiments of this application may further include: a transmission module. The transmission module is configured to transmit second information through the first PDU session when the policy configuration apparatus 60 receives the second information of a second device, where the second information is information between the second device and the first network. The second device pertains to the target object, and the second device is connected to the policy configuration apparatus 60.

In a possible implementation, the first policy information includes first rule matching information, and the first rule matching information is used to match the first PDU session with the target object. The second policy information includes second rule matching information, the second rule matching information is used to match the second PDU session, and the second PDU session serves the target object.

According to the policy configuration apparatus provided in embodiments of this application, the first core network function may send at least one of the first policy information and the second policy information to the policy configuration apparatus, that is, the first core network function may configure at least one of two policies for the policy configuration apparatus to match a PDU session, instead of configuring a same policy for the policy configuration apparatus and a management terminal to match PDU sessions. Therefore, the occurrence of the policy configuration apparatus failing to match a PDU session based on a configured policy can be reduced, and the occurrence of the policy configuration apparatus failing to communicate with the network-side device can be reduced. In this way, communication reliability may be improved.

The policy configuration apparatus in embodiments of this application may be an electronic device, for example, an electronic device having an operating system, or may be a component, for example, an integrated circuit or a chip in an electronic device. The electronic device may be a terminal, or may be another device other than a terminal. For example, the terminal may include but is not limited to the foregoing types of the terminal 11, and the another device may be a server, a network attached storage (Network Attached Storage, NAS), or the like. This is not specifically limited in embodiments of this application.

The policy configuration apparatus provided in embodiments of this application can implement processes implemented in the method embodiment of FIG. 1 to FIG. 5, and the same technical effects are achieved. To avoid repetition, details are not described herein again.

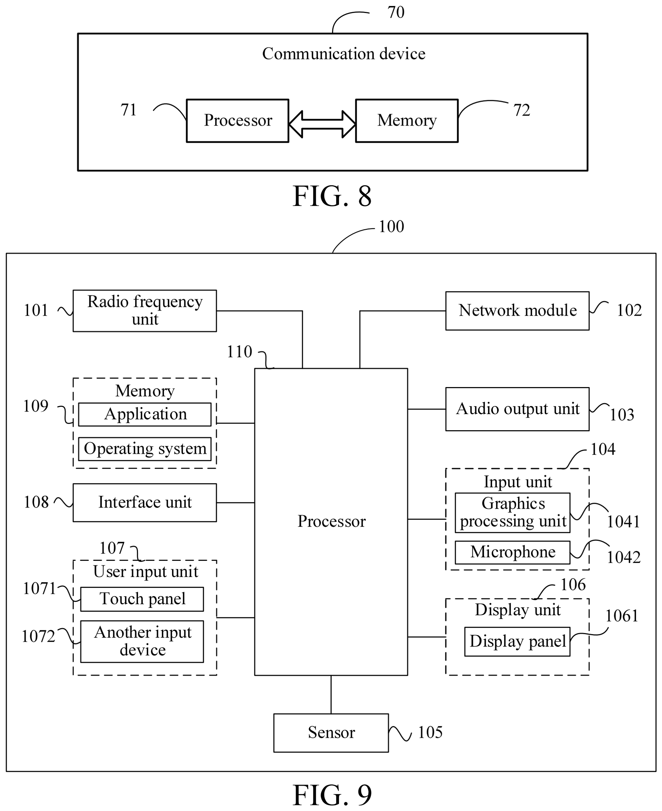

Optionally, in embodiments of this application, as shown in FIG. 8, an embodiment of this application further provides a communication device 70, including a processor 71 and a memory 72. The memory 72 stores a program or instructions that may be run on the processor 71. For example, if the communication device 70 is a terminal, when the program or the instructions are executed by the processor 71, the steps of the foregoing policy configuration method embodiment corresponding to the first communication device are implemented, and the same technical effects can be achieved. If the communication device 70 is a network-side device, when the program or the instructions are executed by the processor 71, the steps of the foregoing policy configuration method embodiment corresponding to the first core network function are implemented, and the same technical effects can be achieved.

An embodiment of this application further provides a terminal, including a processor and a communication interface, where the communication interface is configured to receive target information from a first core network function. The target information includes at least one of the following: first policy information and second policy information, where rule matching information in the first policy information is used to match a first PDU session, and rule matching information in the second policy information is used to match a second PDU session. The first PDU session is used to transmit information between a first device and a first network, and the second PDU session is used to transmit information between the terminal and the first network. The first device is connected to the terminal, and the first network is a network corresponding to the first core network function. This terminal embodiment corresponds to the foregoing policy configuration method embodiment corresponding to the first communication device. Implementation processes and implementations of the foregoing method embodiment all may be applied to this terminal embodiment, and the same technical effect can be achieved. Specifically, FIG. 9 is a diagram of a hardware structure of a terminal according to an embodiment of this application.

The terminal 100 includes but is not limited to: at least some of components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the terminal 100 may further include a power supply (such as a battery) that supplies power to the components. The power supply may be logically connected to the processor 110 through a power management system, to implement functions such as charging, discharging, and power consumption management by using the power management system. The structure of the terminal shown in FIG. 9 does not constitute a limitation on the terminal, and the terminal may include more or fewer components than those shown in the figure, or some components are combined, or a different component deployment may be used. Details are not described herein.

It should be understood that, in embodiments of this application, the input unit 104 may include a graphics processing unit (Graphics Processing Unit, GPU) 1041 and a microphone 1042, and the graphics processing unit 1041 processes image data of still images or videos obtained by an image capture apparatus (for example, a camera) in a video capture mode or an image capture mode. The display unit 106 may include a display panel 1061, which may be configured in a form of a liquid crystal display, an organic light-emitting diode, or the like. The user input unit 107 includes at least one of a touch panel 1071 and another input device 1072. The touch panel 1071 is also referred to as a touchscreen. The touch panel 1071 may include two parts: a touch detection apparatus and a touch controller. The another input device 1072 may include, but is not limited to, a physical keyboard, a functional key (such as a volume control key or a switch key), a track ball, a mouse, and a joystick, which is not described herein in detail.

In embodiments of this application, after receiving downlink data from a network-side device, the radio frequency unit 101 may transmit the downlink data to the processor 110 for processing. In addition, the radio frequency unit 101 may send uplink data to the network-side device. Generally, the radio frequency unit 101 includes but is not limited to an antenna, an amplifier, a transceiver, a coupler, a low noise amplifier, a duplexer, and the like.

The memory 109 may be configured to store a software program or instruction and various data. The memory 109 may mainly include a first storage area in which programs or instructions are stored and a second storage area in which data is stored. In the first storage area, the following may be stored: an operating system, application programs or instructions required by at least one function (for example, a sound playing function or an image display function), and the like. In addition, the memory 109 may include a volatile memory or a non-volatile memory, or may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. Volatile memories may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct Rambus dynamic random access memory (Direct Rambus RAM, DRRAM). The memory 109 in embodiments of this application includes but is not limited to these memories and any other memory of a suitable type.

The processor 110 may include one or more processing units. Optionally, the processor 110 integrates an application processor and a modem processor. The application processor mainly processes operations related to an operating system, a user interface, an application program, and the like. The modem processor mainly processes wireless communication signals, for example, a baseband processor. It may be understood that the foregoing modem may not be integrated into the processor 110.

The radio frequency unit 101 is configured to receive target information from a first core network function. The target information includes at least one of the following: first policy information and second policy information, where rule matching information in the first policy information is used to match a first PDU session, and rule matching information in the second policy information is used to match a second PDU session.

The first PDU session is used to transmit information between a first device and a first network, and the second PDU session is used to transmit information between the terminal and the first network. The first device is connected to the terminal, and the first network is a network corresponding to the first core network function.

According to the terminal provided in embodiments of this application, the first core network function may send at least one of the first policy information and the second policy information to the terminal, that is, the first core network function may configure at least one of two policies for the terminal to match a PDU session, instead of configuring a same policy for the terminal and a management terminal to match PDU sessions. Therefore, the occurrence of the terminal failing to match a PDU session based on a configured policy can be reduced, and the occurrence of the terminal failing to communicate with the network-side device can be reduced. In this way, communication reliability may be improved.

Optionally, in embodiments of this application, the radio frequency unit 101 is further configured to send first information to the first core network function. The first information includes at least one of the following: first capability information and subscription information of the terminal. The first capability information indicates the first capability of the terminal for the PIN, and the subscription information includes the information about the PIN service to which the terminal subscribes.

The first information is used for the first core network function to send the target information to the terminal.

Optionally, in embodiments of this application, the target information includes the first policy information.

The processor 110 is configured to perform a first operation based on the first policy information.

The first operation includes any one of the following:
establishing the first PDU session;
using the first PDU session;
releasing the first PDU session; and
stopping using the first PDU session.

Optionally, in embodiments of this application, the radio frequency unit 101 is further configured to transmit second information through the first PDU session when the terminal receives the second information of a second device, where the second information is information between the second device and the first network.

The second device pertains to the target object, and the second device is connected to the first communication device.

An embodiment of this application further provides a network-side device, including a processor and a communication interface. The communication interface is configured to send target information to a first communication device. The target information includes at least one of the following: first policy information and second policy information, where rule matching information in the first policy information is used to match a first PDU session, and rule matching information in the second policy information is used to match a second PDU session. The first PDU session is used to transmit information between a first device and a first network, and the second PDU session is used to transmit information between the first communication device and the first network. The first device is connected to the first communication device, and the first network is a network corresponding to the first core network function. This network-side device embodiment corresponds to the foregoing method embodiment on a network-side device. Implementation processes and implementations of the foregoing method embodiment can be applied to this network-side device embodiment, and the same technical effects can be achieved.

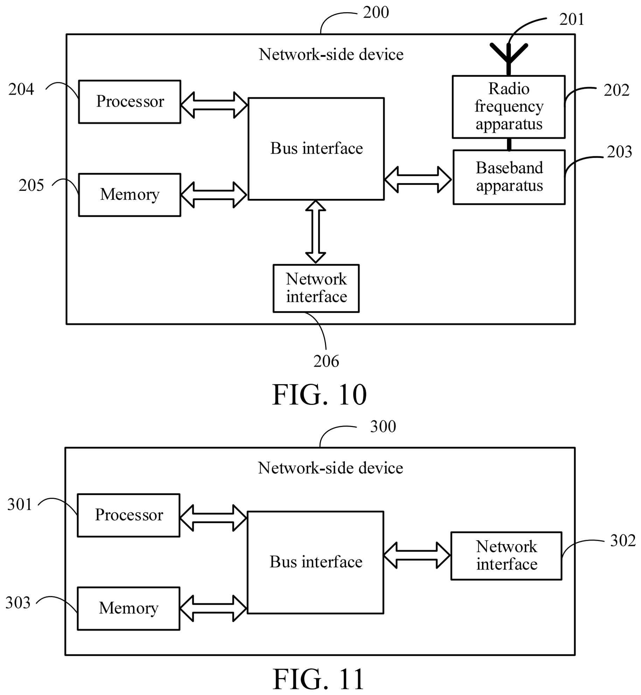

Specifically, an embodiment of this application further provides a network-side device. As shown in FIG. 10, the network-side device 200 includes: an antenna 201, a radio frequency apparatus 202, a baseband apparatus 203, a processor 204, and a memory 205. The antenna 201 is connected to the radio frequency apparatus 202. In an uplink direction, the radio frequency apparatus 202 receives information by using the antenna 201, and sends the received information to the baseband apparatus 203 for processing. In a downlink direction, the baseband apparatus 203 processes to-be-transmitted information, and transmits the information to the radio frequency apparatus 202; and the radio frequency apparatus 202 processes the received information and then transmits the information by using the antenna 201.

The method performed by the network-side device in the foregoing embodiment may be implemented in the baseband apparatus 203, and the baseband apparatus 203 includes a baseband processor.

For example, the baseband apparatus 203 may include at least one baseband board, and a plurality of chips are arranged on the baseband board. As shown in FIG. 10, one of the chips is, for example, a baseband processor, and is connected to the memory 205 through a bus interface, to invoke a program in the memory 205 to perform the operations performed by a network device in the foregoing method embodiment.

The network-side device may further include a network interface 206. The interface is, for example, a common public radio interface (CPRI).

Specifically, the network-side device 200 provided in embodiments of this application further includes: instructions or a program that is stored in the memory 205 and may be run on the processor 204. The processor 204 invokes the instructions or the program in the memory 205 to perform the method performed by each module shown in FIG. 6, and the same technical effects are achieved. To avoid repetition, details are not described herein again.

Specifically, an embodiment of this application further provides a network-side device. As shown in FIG. 11, the network-side device 300 includes: a processor 301, a network interface 302, and a memory 303. The network interface 302 is, for example, a common public radio interface (common public radio interface, CPRI).

Specifically, the network-side device 300 provided in embodiments of this application further includes: instructions or a program that is stored in the memory 303 and may be run on the processor 301. The processor 301 invokes the instructions or the program in the memory 303 to perform the method performed by each module shown in FIG. 6, and the same technical effects are achieved. To avoid repetition, details are not described herein again.

An embodiment of this application further provides a readable storage medium, storing a program or instructions. When the program or the instructions are executed by a processor, the processes of the foregoing policy configuration method embodiment are implemented, and the same technical effects can be achieved. To avoid repetition, details are not described herein.

The processor may be a processor of the terminal in foregoing embodiment. The readable storage medium may be non-volatile or non-transient. The readable storage medium may include a computer-readable storage medium, such as a computer read-only memory ROM, a random access memory RAM, a magnetic disk, or an optical disk.

An embodiment of this application further provides a chip, including a processor and a communication interface. The communication interface is coupled to the processor. The processor is configured to run a program or instructions, to implement the processes of the foregoing policy configuration method embodiment, and the same technical effects can be achieved. To avoid repetition, details are not described herein.

It should be understood that the chip mentioned in embodiments of this application may also be referred to as a system on chip, a system chip, a system on a chip, a system-on-a-chip, or the like.

An embodiment of this application further provides a computer program/program product. The computer program/program product is stored in a storage medium. The computer program/program product is executed by at least one processor, to implement the processes of the foregoing policy configuration method embodiment, and the same technical effects can be achieved. To avoid repetition, details are not described herein again.

An embodiment of this application further provides a policy configuration system, include: a terminal and a network-side device, where the network-side device may be configured to perform the steps of the foregoing policy configuration method corresponding to the first core network function, and the terminal may be configured to perform the steps of the foregoing policy configuration method corresponding to the first communication device.

It should be noted that, the terms "include", "comprise", or any other variations thereof in this specification are intended to cover a non-exclusive inclusion, such that a process, method, article, or apparatus including a series of elements not only includes those elements, but also includes other elements that are not explicitly listed, or also includes elements inherent to such process, method, article, or apparatus. Without more restrictions, the elements defined by the sentence "including a ..." do not exclude existence of other identical elements in the process, the method, the article, or the apparatus including the elements. In addition, it should be noted that the scope of the method and apparatus of embodiments of this application is not limited to performing functions in the order shown or discussed, but may include performing functions in a substantially concurrent manner or in reverse order depending on the functionality involved, for example, the method described may be performed in an order different from that described, and various steps may be further added, omitted, or combined. In addition, features described with reference to some examples may be combined in other examples.

According to the descriptions in the foregoing implementations, a person skilled in the art may clearly learn that the method according to the foregoing embodiment may be implemented by relying on software and a commodity hardware platform or by using hardware. Based on such an understanding, the technical solutions of this application essentially or the part contributing to the conventional technology may be implemented in a form of a computer software product. The computer software product is stored in a storage medium (such as an ROM/RAM, a magnetic disk, or an optical disc) and includes several instructions for enabling a terminal (which may be a mobile phone, a computer, a server, an air conditioner, a network device, or the like) to perform the methods described in embodiments of this application.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the principles of this application and the protection scope of the claims, and all the modifications shall fall within the protection scope of this application.

## Claims

1. A policy configuration method, comprising:
sending, by a first core network function, target information to a first communication device, wherein the target information comprises at least one of the following: first policy information and second policy information, wherein rule matching information in the first policy information is used to match a first protocol data unit PDU session, and rule matching information in the second policy information is used to match a second PDU session;
the first PDU session is used to transmit information between a first device and a first network, and the second PDU session is used to transmit information between the first communication device and the first network; and the first device is connected to the first communication device, and the first network is a network corresponding to the first core network function.

2. The method according to claim 1, wherein before sending, by the first core network function, the target information to the first communication device, the method further comprises:
obtaining, by the first core network function, first information; the first information comprises at least one of the following: first capability information and subscription information of the first communication device, wherein the first capability information indicates a first capability of the first communication device for a personal IoT network PIN, and the subscription information comprises information about a PIN service to which the first communication device subscribes; and
sending, by the first core network function, the target information to the first communication device comprises:
sending, by the first core network function, the target information to the first communication device based on the first information.

3. The method according to claim 2, wherein the first capability comprises at least one of the following: presence or absence of a capability of processing the first policy information, and presence or absence of a gateway capability.

4. The method according to claim 2, wherein sending, by the first core network function, the target information to the first communication device based on the first information comprises:
sending or skipping sending, by the first core network function, the first policy information to the first communication device based on the first information.

5. The method according to claim 2, wherein obtaining, by the first core network function, the first information comprises:
obtaining, by the first core network function, the first information from the first communication device or a second core network function.

6. The method according to claim 1, wherein both the first PDU session and the second PDU session serve a target object, and the target object comprises any one of the following: a first PIN network and a first PIN service.

7. The method according to claim 6, wherein the first policy information comprises first rule matching information, and the first rule matching information is used to match the first PDU session with the target object; and
the second policy information comprises second rule matching information, the second rule matching information is used to match the second PDU session, and the second PDU session serves the target object.

8. A policy configuration method, comprising:
receiving, by a first communication device, target information from a first core network function; the target information comprises at least one of the following: first policy information and second policy information, wherein rule matching information in the first policy information is used to match a first PDU session, and rule matching information in the second policy information is used to match a second PDU session;
the first PDU session is used to transmit information between a first device and a first network, and the second PDU session is used to transmit information between the first communication device and the first network; and the first device is connected to the first communication device, and the first network is a network corresponding to the first core network function.

9. The method according to claim 8, wherein before receiving, by the first communication device, the target information from the first core network function, the method further comprises:
sending, by the first communication device, first information to the first core network function; the first information comprises at least one of the following: first capability information and subscription information of the first communication device, wherein the first capability information indicates a first capability of the first communication device for a PIN, and the subscription information comprises information about a PIN service to which the first communication device subscribes; and
the first information is used for the first core network function to send the target information to the first communication device.

10. The method according to claim 9, wherein the first capability comprises at least one of the following: presence or absence of a capability of processing the first policy information, and presence or absence of a gateway capability.

11. The method according to claim 8, wherein the target information comprises the first policy information, and the method further comprises:
performing, by the first communication device, a first operation based on the first policy information; and
the first operation comprises any one of the following:
establishing the first PDU session;
using the first PDU session;
releasing the first PDU session; and
stopping using the first PDU session.

12. The method according to claim 11, wherein the first operation further comprises any one of the following:
establishing, by the first communication device, the first PDU session in a case that the first PDU session does not exist;
using, by the first communication device, the first PDU session in a case that the first PDU session exists;
releasing, by the first communication device, the first PDU session in a case that first rule matching information in the first policy information is invalidated; and
stopping using, by the first communication device, the first PDU session in a case that first rule matching information in the first policy information is invalidated, wherein
the first rule matching information is used to match the first PDU session.

13. The method according to claim 8, wherein both the first PDU session and the second PDU session serve a target object, and the target object comprises any one of the following: a first PIN network and a first PIN service.

14. The method according to claim 13, wherein the method further comprises:
transmitting, by the first communication device, second information through the first PDU session in a case that the first communication device receives the second information of a second device, wherein the second information is information between the second device and the first network; and
the second device pertains to the target object, and the second device is connected to the first communication device.

15. The method according to claim 13, wherein the first policy information comprises first rule matching information, and the first rule matching information is used to match the first PDU session with the target object; and
the second policy information comprises second rule matching information, the second rule matching information is used to match the second PDU session, and the second PDU session serves the target object.

16. A policy configuration apparatus, comprising: a sending module;
the sending module is configured to send target information to a first communication device; the target information comprises at least one of the following: first policy information and second policy information, wherein rule matching information in the first policy information is used to match a first PDU session, and rule matching information in the second policy information is used to match a second PDU session;
the first PDU session is used to transmit information between a first device and a first network, and the second PDU session is used to transmit information between the first communication device and the first network; and the first device is connected to the first communication device, and the first network is a network corresponding to the policy configuration apparatus.

17. The policy configuration apparatus according to claim 16, wherein the policy configuration apparatus further comprises: an obtaining module;
the obtaining module is configured to obtain first information; the first information comprises at least one of the following: first capability information and subscription information of the first communication device, wherein the first capability information indicates a first capability of the first communication device for a PIN, and the subscription information comprises information about a PIN service to which the first communication device subscribes; and
the sending module is specifically configured to send the target information to the first communication device based on the first information obtained by the obtaining module.

18. The policy configuration apparatus according to claim 17, wherein the first capability comprises at least one of the following: presence or absence of a capability of processing the first policy information, and presence or absence of a gateway capability.

19. The policy configuration apparatus according to claim 17, wherein
the sending module is specifically configured to send or not send the first policy information to the first communication device based on the first information.

20. The policy configuration apparatus according to claim 17, wherein
the obtaining module is specifically configured to obtain the first information from the first communication device or a second core network function.

21. The policy configuration apparatus according to claim 16, wherein both the first PDU session and the second PDU session serve a target object, and the target object comprises any one of the following: a first PIN network and a first PIN service.

22. The policy configuration apparatus according to claim 21, wherein the first policy information comprises first rule matching information, and the first rule matching information is used to match the first PDU session with the target object; and
the second policy information comprises second rule matching information, the second rule matching information is used to match the second PDU session, and the second PDU session serves the target object.

23. A policy configuration apparatus, comprising: a receiving module;
the receiving module is configured to receive target information from a first core network function; the target information comprises at least one of the following: first policy information and second policy information, wherein rule matching information in the first policy information is used to match a first PDU session, and rule matching information in the second policy information is used to match a second PDU session;
the first PDU session is used to transmit information between a first device and a first network, and the second PDU session is used to transmit information between the policy configuration apparatus and the first network; and the first device is connected to the policy configuration apparatus, and the first network is a network corresponding to the first core network function.

24. The policy configuration apparatus according to claim 23, wherein the policy configuration apparatus further comprises: a sending module;
the sending module is configured to send first information to the first core network function; the first information comprises at least one of the following: first capability information and subscription information of the policy configuration apparatus, wherein the first capability information indicates a first capability of the policy configuration apparatus for a PIN, and the subscription information comprises information about a PIN service to which the policy configuration apparatus subscribes; and
the first information is used for the first core network function to send the target information to the policy configuration apparatus.

25. The policy configuration apparatus according to claim 24, wherein the first capability comprises at least one of the following: presence or absence of a capability of processing the first policy information, and presence or absence of a gateway capability.

26. The policy configuration apparatus according to claim 23, wherein the target information comprises the first policy information, and the policy configuration apparatus further comprises: an execution module;
the execution module is configured to perform a first operation based on the first policy information; and
the first operation comprises any one of the following:
establishing the first PDU session;
using the first PDU session;
releasing the first PDU session; and
stopping using the first PDU session.

27. The policy configuration apparatus according to claim 26, wherein the first operation further comprises any one of the following:
establishing the first PDU session in a case that the first PDU session does not exist;
using the first PDU session in a case that the first PDU session exists;
releasing the first PDU session in a case that first rule matching information in the first policy information is invalidated; and
stopping using the first PDU session in a case that first rule matching information in the first policy information is invalidated, wherein
the first rule matching information is used to match the first PDU session.

28. The policy configuration apparatus according to claim 23, wherein both the first PDU session and the second PDU session serve a target object, and the target object comprises any one of the following: a first PIN network and a first PIN service.

29. The policy configuration apparatus according to claim 28, wherein the policy configuration apparatus further comprises: a transmission module;
the transmission module is configured to transmit second information through the first PDU session in a case that the policy configuration apparatus receives the second information of a second device, wherein the second information is information between the second device and the first network; and
the second device pertains to the target object, and the second device is connected to the policy configuration apparatus.

30. The policy configuration apparatus according to claim 28, wherein the first policy information comprises first rule matching information, and the first rule matching information is used to match the first PDU session with the target object; and
the second policy information comprises second rule matching information, the second rule matching information is used to match the second PDU session, and the second PDU session serves the target object.

31. A network-side device, comprising a processor and a memory, wherein the memory stores a program or instructions that may be run on the processor, and when the program or the instructions are executed by the processor, the steps of the policy configuration method according to any one of claims 1 to 7 are implemented.

32. A terminal, comprising a processor and a memory, wherein the memory stores a program or instructions that may be run on the processor, and when the program or the instructions are executed by the processor, the steps of the policy configuration method according to any one of claims 8 to 15 are implemented.

33. A readable storage medium, wherein the readable storage medium stores a program or instructions, and when the program or the instructions are executed by a processor, the steps of the policy configuration method according to any one of claims 1 to 7 or the steps of the policy configuration method according to any one of claims 8 to 15 are implemented.
